# EUROPÄISCHE PATENTANMELDUNG

(11) **EP 4 711 743 A1**
(43) Veröffentlichungstag der Anmeldung: **18.03.2026**
(21) Anmeldenummer: 25202467.4
(22) Anmeldetag: 16.09.2025
(51) Int. Cl.: G01N 21/17, G01N 29/24

(54) **DETEKTIONSVERFAHREN ZUR ABSORPTIONSDETEKTION IN EINER PROBE IN EINEM PROBEVOLUMEN UND VORRICHTUNG ZUR ABSORPTIONSDETEKTION IN EINER PROBE**

(30) Priorität: 16.09.2024 DE 102024126551
(71) Anmelder: Universität Stuttgart, 70569 Stuttgart (DE)
(72) Erfinder: Angstenberger, Simon, 70567 Stuttgart (DE); Steinle, Tobias, 70839 Gerlingen (DE); Giessen, Harald, 67297 Marnheim (DE); Flöß, Moritz, 88376 Königseggwald (DE); Ruchka, Pavel, 70569 Stuttgart (DE); Mangold, Florian, 73249 Wernau (DE)
(74) Vertreter: dompatent

(57) **Zusammenfassung**

Vorrichtung (10) zur Absorptionsdetektion in einer Probe mit einer durchstimmbaren Lichtquelle (12) zur Erzeugung eines optischen Anregungssignals, einem Modulationselement (14) zur Modulation des optischen Anregungssignals mit einer Modulationsfrequenz, wobei durch das modulierte optische Anregungssignal in der Probe in einem Probevolumen eine Dichteschwankung erzeugt wird, einem akustischen Resonanzelement (16), wobei das akustische Resonanzelement (16) resonant ist zu der Modulationsfrequenz, einer Detektionseinheit (25), wobei die Detektionseinheit (25) mit dem akustischen Resonanzelement (16) verbunden ist zur Detektion einer Anregung des akustischen Resonanzelements (16), und einer Steuerungseinheit (24), wobei die Steuerungseinheit (24) ausgebildete ist ein Abregungssignal zu erzeugen und auf das akustische Resonanzelement (16) zu übertragen, wobei das Abregungssignal mit der Modulationsfrequenz des optischen Anregungssignals moduliert ist und phasenverschoben ist zu dem optischen Anregungssignal.

## Beschreibung

Die vorliegende Erfindung betrifft ein Detektionsverfahren zur Absorptionsdetektion in einer Probe, insbesondere ausgebildet als quarzverstärkte photoakustische Spektroskopie (Quarz-enhanced photoacoustic spectroscopy - QPEAS) sowie eine Vorrichtung zur Durchführung eines solchen Detektionsverfahrens.

Im Stand der Technik zur Detektion von Spurengasen wird der photoakustische Effekt genutzt: Zur Detektion eines Gasmoleküls strahlt man Laserlicht durch das betreffende Gasgemisch. Trifft man nun mit der Wellenlänge des Lichts genau eine Rotations- oder Vibrationsbande des betreffenden Moleküls, so wird dieses in einen angeregten Zustand versetzt. Nach kurzer Zeit fällt das Molekül in den Grundzustand zurück und gibt die gespeicherte Energie in Form von Wärme frei.

Diesen Prozess kann man periodisch wiederholen, indem man das Laserlicht in seiner Amplitude moduliert. Die entstehende Wärme führt dabei zu einer Dichteschwankung, die als Schallwelle detektiert werden kann. Dieser Prozess ist bereits bei äußerst geringen Konzentrationen messbar. Aus A. A. Kosterev, Y. A. Bakhirkin, R. F. Curl, and F. K. Tittel, "Quartz-enhanced photoacoustic spectroscopy," Optics Letters 27, 1902-1904 (2002) ist dabei der Einsatz von Quarzstimmgabeln mit hoher Resonatorgüte bekannt, wodurch die Detektionsgenauigkeit weiter erhöht werden kann. Dies wird als QPEAS bezeichnet. Durch die Quarzstimmgabeln ist eine präzise Erfassung des durch die Dichteschwankungen erzeugte akustische Signal möglich.

Hierbei ist die Detektion üblicherweise beschränkt auf bekannte Spurengase, wobei zur Detektion lediglich eine Linie des Vibrationsspektrums erfasst wird. Sollten unbekannte Gase oder Gasgemische detektiert werden, ist es erforderlich, eine große spektrale Durchstimmbarkeit der verwendeten Lichtquelle bereitzustellen.

Allerdings wurde durch J. B. Christensen, L. Høgstedt, S. M. M. Friis, J.-Y. Lai, M.-H. Chou, D. Balslev-Harder, J. C. Petersen, and M. Lassen, "Intrinsic Spectral Resolution Limitations of QEPAS Sensors for Fast and Broad Wavelength Tuning," Sensors 20, 4725 (2020) gezeigt, dass die hohe Resonatorgüte der verwendeten Quarzgabeln eine intrinsische Limitation für die schnelle Erfassung von genauen Spektren darstellt: Da die Gabel nach der Anregung an einer bestimmten Wellenlänge durch die hohe Resonatorgüte noch lange nachschwingt, kann die nächste Messung an der nächsten Wellenlänge erst verzögert erfolgen. Im Umkehrschluss schmiert das extrahierte photoakustische Absorptionsspektrum aus, wenn man die Durchstimmgeschwindigkeit der Wellenlänge des Lasers erhöht. Hierdurch ergeben sich Messzeiten für ein einzelnes Absorptionsspektrum von mehreren Minuten. Eine schnelle Detektion von Spurengasen in einer Probe ist somit mit dem bekannten QEPAS nicht möglich.

Aufgabe der vorliegenden Erfindung ist es, ein Detektionsverfahren zu schaffen, bei dem ein Absorptionsspektrum eines Spurengases in kurzer Zeit erfasst werden kann.

Die Aufgabe wird gelöst durch ein Detektionsverfahren gemäß Anspruch 1 sowie eine Vorrichtung gemäß Anspruch 13.

Das Detektionsverfahren zur Absorptionsdetektion einer Probe gemäß der vorliegenden Erfindung weist die folgenden Schritte auf:
Erzeugen eines optischen Anregungssignals mit einer ersten Wellenlänge, wobei das optische Anregungssignal mit einer Modulationsfrequenz moduliert ist,
Beleuchten der Probe in einem Probevolumen mit dem modulierten optischen Anregungssignals zur Erzeugung von Dichteschwankungen in dem Probenvolumen mit einer Frequenz, die der Modulationsfrequenz entspricht, wobei durch die Dichteschwankungen ein akustisches Resonanzelement angeregt wird,
Detektion der Anregung des akustischen Resonanzelements zur Ermittlung einer Absorption des optischen Anregungssignals in der Probe,
Erzeugen eines Abregungssignals und Übertragen des Abregungssignals auf das akustische Resonanzelement, wobei das Abregungssignal mit der Modulationsfrequenz des optischen Anregungssignals moduliert ist und phasenverschoben ist zu dem modulierten optischen Anregungssignal.

Somit wird zunächst ein optisches Anregungssignal mit einer ersten Wellenlänge erzeugt zur Detektion der Absorption der Probe an der ersten Wellenlänge, wobei das Anregungssignal mit einer Modulationsfrequenz moduliert ist. Insbesondere handelt es sich hierbei um eine Amplitudenmodulation, so dass sich die Leistung des optischen Anregungssignals mit der Modulationsfrequenz ändert. Mit dem modulierten optischen Anregungssignal wird die Probe in einem Probevolumen beleuchtet zur Erzeugung von Temperatur- und somit Dichteschwankungen in dem Probevolumen. Sofern die erste Wellenlänge einer Absorptionsbande in der Probe entspricht, so wird dieses Molekül bzw. das Material in einen angeregten Zustand versetzt. Nach kurzer Zeit fällt das Molekül oder Material in den Grundzustand zurück und gibt die gespeicherte Energie in Form von Wärme frei. Aufgrund der Modulation des optischen Anregungssignals wird dieser Prozess wiederholt mit der Modulationsfrequenz, wodurch eine modulierte Temperaturschwankung und somit modulierte Dichteschwankung in dem Probevolumen erzeugt wird, mit einer Frequenz, die der Modulationsfrequenz entspricht, sofern eine Absorption in der Probe bei der ersten Wellenlänge auftritt. Durch die Dichteschwankung wird ein akustisches Resonanzelement angeregt.

Nachfolgend erfolgt eine Detektion der Anregung des akustischen Resonanzelements, zum Beispiel mit einem Lock-in Verstärker. Sofern das akustische Resonanzelement angeregt wurde, kann auf eine Absorption in der Probe bei der ersten Wellenlänge geschlossen werden. Findet keine Anregung des akustischen Resonanzelements bei der ersten Wellenlänge statt, wurde das optische Anregungssignal mit der ersten Wellenlänge nicht durch das Probevolumen absorbiert.

Gemäß der vorliegenden Erfindung wird nachfolgend ein Abregungssignal erzeugt und das Abregungssignal auf das akustische Resonanzelement übertragen, so dass die Anregung bzw. Oszillation des akustischen Resonanzelements, verursacht durch das modulierte optische Anregungssignal, gedämpft wird bzw. das akustische Resonanzelement abgeregt wird. Hierbei wird das Abregungssignal nicht gleichzeitig mit dem optischen Anregungssignal erzeugt, sondern mit einem Zeitversatz, der insbesondere eine unbeeinflusste Detektion der Anregung zulässt. Das Abregungssignal wir jedoch erzeugt und auf das akustische Resonanzelement übertragen, solange das akustische Resonanzelement auf Grund der Anregung durch das optische Anregungselement schwingt bzw. oszilliert. Hierbei ist das Abregungssignal mit einer Modulationsfrequenz moduliert, die der Modulationsfrequenz des optischen Anregungssignals entspricht. Modulation des Abregungssignals und die Modulationsfrequenz des optischen Anregungssignals bzw. die Frequenz der Dichteschwankung sind somit im Wesentlichen gleich. Hierbei ist jedoch das Abregungssignal phasenverschoben zu der Modulation des optischen Anregungssignal. Durch die Dichteschwankungen wird das akustische Resonanzelement in Schwingung versetzt. Durch das Abregungssignal, welches phasenverschoben ist zu der Schwingung des akustischen Resonanzelements, wirkt das Abregungssignal der Schwingung des akustischen Resonanzelements entgegen und dämpft hierdurch die Anregung des akustischen Resonanzelements. Somit kann trotz einer hohen Güte des akustischen Resonanzelements zur Verbesserung der Detektionsempfindlichkeit der erzeugten Dichteschwankungen ein ungewolltes Nachschwingen des akustischen Resonanzelements reduziert werden, so dass bereits nach kurzer Zeit eine Messung bei einer zweiten Wellenlänge durchgeführt werden kann. Somit kann aufgrund der durch das Abregungssignal erfolgenden kohärenten Kontrolle unerwünschtes Nachschwingen des akustischen Resonanzelements reduziert werden und insbesondere das verbleibende Amplitudensignal in der Schwingung des akustischen Resonanzelements reduziert und insbesondere auf Null reduziert werden. Somit können in kurzen Zeitabständen Messungen für unterschiedliche Wellenlängen durchgeführt werden. Ein "Ausschmieren" der Absorptionsspektren, wie beispielsweise bei Christensen et al. beschrieben, kann durch die kohärente Kontrolle effektiv verhindert werden.

Vorzugsweise weist das akustische Resonanzelement eine Resonanzfrequenz auf, welche mit der Modulationsfrequenz des optischen Anregungssignals übereinstimmt. Somit erfolgt eine Anregung des akustischen Resonanzelements durch die Dichteschwankung, welche eine Frequenz aufweist, die der Modulationsfrequenz entspricht. Somit kann durch das akustische Resonanzelement diese Dichteschwankung mit hoher Sensitivität detektiert werden. Alternativ hierzu kann die Modulationsfrequenz des optischen Anregungssignals einem Oberton des akustischen Resonanzelements entsprechen, so dass dieser Oberton des akustischen Resonanzelements angeregt wird.

Vorzugsweise beträgt die Modulationsfrequenz des optischen Anregungssignals und entsprechend auch die Modulationsfrequenz des Abregungssignals 12 kHz. Insbesondere ist das akustische Resonanzelement resonant bei einer Frequenz von 12 kHz. Jedoch ist die vorliegende Erfindung hierauf nicht beschränkt, so dass andere Modulationsfrequenzen herangezogen werden können, ohne dass der Effekt der vorliegenden Erfindung hiervon wesentlich beeinflusst werden würde. Ebenfalls können Obertöne des akustischen Resonanzelements angeregt werden zur Detektion.

Vorzugsweise werden die Schritte des Verfahrens wiederholt bei einer zweiten Wellenlänge, so dass die Absorption bei dieser zweiten Wellenlänge gemäß den vorstehend beschriebenen Schritten detektiert werden kann. Insbesondere werden die Schritte des Verfahrens wiederholt über einen Wellenlängenbereich. Insbesondere erstreckt sich der Wellenlängenbereich über mehr als 1 µm Bandbreite, insbesondere mehr als 2 µm, bevorzugt mehr als 3 µm und besonders bevorzugt 7 µm oder mehr. Vorzugsweise liegt der Wellenlängenbereich zwischen einer Wellenlänge von 1 µm und 20 µm und insbesondere zwischen 1 µm und 4 µm, oder insbesondere zwischen 8 und 15 µm. Insbesondere ist die vorliegende Erfindung nicht beschränkt auf einen bestimmten Wellenlängenbereich, so dass der erfasste Wellenlängenbereich insbesondere abhängt von der verwendeten Lichtquelle.

Vorzugsweise wird die Wellenlänge des optischen Anregungssignals kontinuierlich oder schrittweise verändert.

Vorzugsweise wird die Wellenlänge des optischen Anregungssignals geändert mit einer Verfahrgeschwindigkeit von mehr als 50 nm/s und bevorzugt mit mehr als 100 nm/s bzw. mit mehr als 50 cm⁻¹s⁻¹ und bevorzugt mehr als 100 cm⁻¹s⁻¹. Gemäß dem Verfahren der vorliegenden Erfindung bleibt hierbei die Modulationsfrequenz für alle Wellenlängen gleich, so dass die durch die Absorption in den Probevolumen erzeugte Dichteschwankung stets die gleiche Frequenz aufweist, so dass durch die Dichteschwankungen in den Probevolumen eine Anregung des akustischen Resonanzelements erfolgen kann. Somit kann ein großer Wellenlängenbereich schnell erfasst werden und insbesondere können vollständige Absorptionsspektren von Spurengasen über einen Wellenlängenbereich von mehreren hundert Nanometern innerhalb weniger Sekunden erfasst werden. Somit ist eine real-time Detektion möglich, so dass auch beispielswiese dynamische Änderungen von Zusammensetzungen einer Gasprobe zuverlässig und mit hoher Genauigkeit detektiert werden.

Vorzugsweise weist das akustische Resonanzelement eine Resonatorgüte von mehr als 100 und insbesondere mehr als 1.000 oder mehr als 10000 auf. Aufgrund der hohen Resonatorgüte des akustischen Resonanzelements ist eine Verbesserung der Detektionsgenauigkeit erreicht. Gleichzeitig erhöht sich jedoch hierdurch auch das unerwünschte Nachschwingen, welches jedoch aufgrund der kohärenten Kontrolle insbesondere der Anlegung des Abregungssignals gedämpft wird.

Vorzugsweise ist das Abregungssignal um 180° phasenverschoben bzw. um ein ungerades Vielfaches von 180° phasenverschoben zu dem modulierten optischen Anregungssignal. Hierdurch wird sichergestellt, dass das Abregungssignal exakt entgegengesetzt der Schwingung des akustischen Resonanzelements, verursacht durch das modulierte optische Anregungssignal, wirkt und hierdurch besonders effektiv eine Dämpfung des akustischen Resonanzelements erreicht werden kann.

Vorzugsweise wird die Phase des Abregungssignals kontinuierlich verändert bis zu einem Phasenversatz von 180° bzw. einem ungeraden Vielfachen von 180°. Somit kann beispielsweise bereits bei Beleuchten des Probevolumens mit dem optischen Anregungssignal ein Abregungssignal erzeugt werden und auf das akustische Resonanzelement übertragen werden, wobei die Phase des Abregungssignals sich kontinuierlich erhöht und hierdurch eine kontinuierliche Dämpfung der Schwingung des akustischen Resonanzelements erreicht wird. Eine kontinuierliche Änderung der Phase des Abregungssignals wird auch als "Chirp" bezeichnet.

Vorzugsweise können sich das Anregungssignal und das Abregungssignal zumindest teilweise überlappen. Alternativ hierzu erfolgt die Erzeugung des Abregungssignals nach dem Erzeugen des modulierten optischen Anregungssignals zu dem Beleuchten des Probevolumens. So kann insbesondere zwischen einem Ende des Anregungssignals und einem Anfang des Abregungssignals ein zeitlicher Abstand von Δ*t* = *n*/2 · *T* vorliegen, mit *n* als einer ungeraden Ganzzahl ≥ 1 und *T* = 1/*f* der Periodendauer der Modulation des optischen Anregungssignals. Aufgrund des derart gewählten zeitlichen Abstands ist gleichzeitig die Phase zwischen dem Anregungssignal und dem Abregungssignal um 180° verschoben, so dass das Abregungssignal die Anregung des akustischen Resonanzelements effektiv dämpfen kann.

Vorzugsweise ist das modulierte optische Anregungssignal eine Sequenz aus optischen Pulsen. Insbesondere ist die Dauer einer solchen Sequenz kürzer als 20 ms, insbesondere kürzer als 12 ms und bevorzugt kürzer als 8 ms. Hierbei weist eine solche Sequenz insbesondere weniger als 200 Modulationszyklen des optischen Anregungssignals auf, bevorzugt weniger als 100 Modulationszyklen und besonders bevorzugt 50 Modulationszyklen oder weniger auf. Trotz der geringen Anzahl an Modulationszyklen bzw Pulsen des optischen Anregungssignals sind diese ausreichend, um eine ausreichende Anregung des akustischen Resonanzelements zu gewährleisten, die herangezogen werden kann zur Detektion der Absorption in dem Probevolumen. Aufgrund der kurzen Zeitdauer ist eine schnelle Messung über einen großen Wellenlängenbereich möglich.

Vorzugsweise handelt es sich bei den Pulsen der Sequenz um ein Rechteckpuls, ein Dreieckspuls, ein Sägezahnpuls oder einen sinusförmigen Puls.

Vorzugsweise wird ein Abregungssignal nur dann erzeugt, wenn zuvor eine Anregung des akustischen Resonanzelements erfasst wurde. Hierdurch wird sichergestellt, dass es nicht zu einer ungewollten Anregung des akustischen Resonanzelements kommt, sofern keine Absorption des optischen Anregungssignals in der Probe auftritt bzw. keine Anregung des akustischen Resonanzelements durch das modulierte optische Anregungssignal.

Vorzugsweise handelt es sich bei dem akustischen Resonanzelement um eine Quarzgabel mit einem Piezoelement, wobei durch das Piezoelement die Anregung des akustischen Resonanzelements detektiert wird. Durch die Bewegung der Quarzgabel, welche auf das Piezoelement übertragen wird, wird durch das Piezoelement eine Spannung erzeugt, wobei die Spannung mit der Modulationsfrequenz des optischen Anregungssignals schwingt. Hieraus kann auf eine Absorption des optischen Anregungssignals bei der ersten bzw. der jeweiligen Wellenlänge des optischen Anregungssignals durch die Probe geschlossen werden insbesondere mittels einer Auswerteelektronik.

Vorzugsweise handelt es sich bei dem akustischen Resonanzelement um ein Mikrofon mit einer schwingenden Membran.

Vorzugsweise handelt es sich bei dem akustischen Resonanzelement um eine MEMS Membran oder ein MEMS Element, z.B. einen Cantilever (MEMS = microelectrical mirror system).

Vorzugsweise wird das Abregungssignal als elektrisches Signal erzeugt, welches mittels dem Piezoelement auf die Quarzgabel übertragen wird. Der Piezoeffekt erlaubt hierbei eine Umkehrung, so dass bei Anlegen des Anregungssignals als Spannung an das Piezoelement eine Bewegung auf die Quarzgabel übertragen wird, welche phasenverschoben ist zu der Schwingung der Quarzgabel aufgrund des optischen Anregungssignals bzw. der Dichteschwankungen in dem Probevolumen, welche auf die Quarzgabel übertragen werden. Somit kann auf elektronische Weise eine kohärente Kontrolle durchgeführt werden und durch das angelegte elektrische Signal des Abregungssignals eine Dämpfung der Schwingung der Quarzgabel erzeugt werden.

Vorzugsweise wird das Abregungssignal als optisches Signal erzeugt. Hierbei weist das optische Signal insbesondere dieselbe oder eine im Wesentlichen identische Wellenlänge auf wie das optische Anregungssignal, ist jedoch zu dem modulierten optischen Anregungssignal gerade phasenverschoben, so dass die in dem Probevolumen durch das optische Abregungssignal erzeugten Dichteschwankung der Oszillation des akustischen Resonanzelements, verursacht durch das optische Anregungssignal, gerade entgegenwirken aufgrund des Phasenversatzes zwischen der Modulation des optischen Anregungssignal und des optischen Abregungssignal. Hierbei kann auf einfache Weise und ohne weitere Elektronik ein Abregungssignal bzw. eine kohärente Kontrolle erreicht werden. Insbesondere können Anregungssignal und Abregungssignal von derselben Lichtquelle erzeugt werden.

Vorzugsweise ist die Amplitude des Abregungssignals vergleichbar groß mit der Amplitude des Anregungssignals. Dies kann beispielsweise der Fall sein, sofern es sich um ein optisches Abregungssignal handelt, so dass für das optische Anregungssignal und das optische Abregungssignal die maximale Leistung der Lichtquelle verwendet wird. Alternativ ist die Amplitude des Abregungssignals größer als die Amplitude des Anregungssignals. Dies kann beispielsweise der Fall sein, sofern es sich bei dem Abregungssignal um ein elektrisches Signal handelt. Hierbei kann das Abregungssignal eine größere Amplitude aufweisen als das durch das akustische Resonanzelement detektierte Signal. Insbesondere kann das Abregungssignal um einen Faktor von mehr als 100 und insbesondere mehr als 1000 größer sein, als das Signal, welches durch das akustische Resonanzelement detektiert wird. Hierdurch kann die Abklingdauer des akustischen Resonanzelements weiter verkürzt werden.

Vorzugsweise ist das optische Abregungssignal eine Sequenz aus optischen Pulsen. Insbesondere ist die Dauer einer solchen Sequenz kürzer als 20 ms, insbesondere kürzer als 12 ms und bevorzugt kürzer als 8 ms. Insbesondere die Dauer der Sequenz des optischen Abregungssignals kürzer als die Sequenz des optischen Anregungssignals, Alternativ sind die Sequenzen des optischen Anregungssignals und des optischen Abregungssignals gleichlang. Alternativ ist die Dauer der Sequenz des optischen Abregungssignals länger als die Sequenz des optischen Anregungssignals. Hierbei weist eine solche Sequenz des optischen Abregungssignals insbesondere weniger als 200 Modulationszyklen, bevorzugt weniger als 100 Modulationszyklen und besonders bevorzugt 50 Modulationszyklen oder weniger auf. Trotz der geringen Anzahl an Pulsen bzw. Modulationszyklen des optischen Abregungssignals sind diese ausreichend, um eine ausreichende Dämpfung des akustischen Resonanzelements zu gewährleisten. Aufgrund der kurzen Zeitdauer ist eine schnelle Messung über einen großen Wellenlängenbereich möglich.

Vorzugsweise handelt es sich bei den Lichtpulsen der Sequenz des optischen Abregungssignals um ein Rechteckpuls, ein Dreieckspuls, ein Sägezahnpuls oder einen sinusförmigen Puls. Insbesondere kann die Pulsform identisch oder verschieden sein zu der Pulsform der Modulation des optischen Anregungssignals.

Vorzugsweise handelt es sich bei der Probe in dem Probevolumen um ein Gas, einen Festkörper oder eine Flüssigkeit.

Vorzugsweise ist das akustische Resonanzelement im Probenvolumen angeordnet oder unmittelbar an das Probevolumen angrenzend angeordnet. Handelt es sich bei der Probe beispielsweise um ein Gas, kann das akustische Resonanzelement in dem Probevolumen bzw. innerhalb der Gasprobe angeordnet werden. Handelt es sich bei der Probe um einen Festkörper oder um eine Flüssigkeit, kann das akustische Resonanzelement angrenzend an das jeweilige Probevolumen bzw. die Probe angeordnet sein.

Vorzugsweise wird die Modulation des optischen Anregungssignals durch einen akustisch-optischen Modulator (AOM) erzeugt.

Vorzugsweise wird die Modulation des optischen Anregungssignals durch einen elektro-optischen Modulator (EOM) erzeugt.

Vorzugsweise wird die Modulation des optischen Anregungssignals durch die direkte Modulation der Amplitude der Lichtquelle erzeugt. Hierbei kann es sich beispielsweise bei der Lichtquelle um einen Diodenlaser handeln, so dass die entsprechende Modulation des Anregungssignals durch den Diodenlaser selbst erzeugt wird.

Vorzugsweise wird das optische Abregungssignal durch einen akustisch-optischen Modulator (AOM) erzeugt und insbesondere durch denselben AOM erzeugt, durch den auch das modulierte optische Anregungssignal erzeugt wird.

Vorzugsweise wird die Modulation des optischen Abregungssignals durch einen elektro-optischen Modulator (EOM) erzeugt.

Vorzugsweise wird die Modulation des optischen Abregungssignals durch die direkte Modulation der Amplitude der Lichtquelle erzeugt. Hierbei kann es sich beispielsweise bei der Lichtquelle um einen Diodenlaser handeln, so dass die entsprechende Modulation des Anregungssignals durch den Diodenlaser selbst erzeugt wird.

Vorzugsweise handelt es sich bei der Lichtquelle zur Erzeugung des optischen Anregungssignals und/oder des optischen Abregungssignals um eine durchstimmbare Lichtquelle, so dass durch die Lichtquelle Licht der Wellenlängen erzeugt werden, bei denen Absorption in der Probe detektiert werden soll. Insbesondere handelt es sich bei der Lichtquelle um einen Laser und bevorzugt um einen durchstimmbaren optisch-parametrischen Verstärker (OPO) wie beispielsweise einen FFOPO "Piano" von Stuttgart Instruments. Insbesondere ist die Lichtquelle schmalbandig und weist dabei eine Linienbreite von weniger als 5 cm⁻¹ (FWHM), insbesondere weniger als 2 cm⁻¹ (FWHM) auf. Hierdurch kann eine ausreichende Auflösung der detektierten Absorptionslinien der Probe erreicht werden.

Vorzugsweise werden das optische Anregungssignal und das optische Abregungssignal von derselben Lichtquelle erzeugt oder von unterschiedlichen Lichtquellen.

Ein weiterer Aspekt der vorliegenden Erfindung betrifft eine Vorrichtung zur Absorptionsdetektion in einer Probe. Die Vorrichtung weist eine Lichtquelle auf zur Erzeugung eines optischen Anregungssignals. Insbesondere handelt es sich bei der Lichtquelle um eine durchstimmbare Lichtquelle, so dass durch die Lichtquelle optische Anregungssignale mit unterschiedlichen Wellenlängen erzeugt werden können. Alternativ hierzu kann die Vorrichtung mehrere Lichtquellen aufweisen mit unterschiedlichen Wellenlängen, so dass eine Absorptionsdetektion an den Wellenlängen der mehreren Lichtquellen durchgeführt werden kann. Insbesondere handelt es sich bei der Lichtquelle um einen optisch-parametrischen Verstärker, der durchstimmbar ist, und bevorzugt handelt es sich hierbei um einen FFOPO "Piano" von Stuttgart Instruments.

Weiterhin weist die Vorrichtung ein Modulationselement auf zur Modulation des optischen Anregungssignals mit einer Modulationsfrequenz, wobei durch das modulierte optische Anregungssignal in der Probe in einem Probenvolumen eine Temperatur- und somit Dichteschwankung erzeugt wird. Hierbei weist die Dichteschwankung eine Frequenz auf, die der Modulationsfrequenz des modulierten optischen Anregungssignals entspricht. Weiterhin weist die Vorrichtung ein akustisches Resonanzelement auf, wobei das akustische Resonanzelement resonant ist zu der Modulationsfrequenz. Somit wird das akustische Resonanzelement durch die Dichteschwankungen in der Probe angeregt. Eine Detektionseinheit, die mit dem akustischen Resonanzelement verbunden ist, ist vorgesehen zur Detektion einer Anregung des akustischen Resonanzelements, so dass aus der Anregung des akustischen Resonanzelements auf eine Absorption des optischen Anregungssignals in der Probe geschlossen werden kann. Nur wenn eine Absorption des optischen Anregungssignals in der Probe erfolgt und somit die Wellenlänge des optischen Anregungssignals genau einer Absorptionsbande der Probe entspricht, wird das optische Anregungssignal durch die Probe absorbiert, wodurch das Molekül bzw. das Material der Probe in einen angeregten Zustand gebracht wird. Nach kurzer Zeit fällt das Molekül bzw. das Material der Probe von dem angeregten Zustand zurück in den Grundzustand unter Abgabe der Energie in Form von Wärme. Durch die Wärme wird in der Probe eine Änderung der Temperatur und somit der Dichte bzw. eine Ausdehnung im Festkörper erzeugt. Aufgrund der Modulation des optischen Anregungssignals durch das Modulationselement wird dieser Prozess wiederholt, so dass es zu einer Dichteschwankung in der Probe mit der Modulationsfrequenz kommt, welche sodann von dem akustischen Resonanzelement mittels der Detektionseinheit detektiert werden kann.

Erfindungsgemäß weist die Vorrichtung eine Steuerungseinheit auf, wobei die Steuerungseinheit ausgebildet ist, ein Abregungssignal zu erzeugen und auf das akustische Resonanzelement zu übertragen, wobei das Abregungssignal mit der Modulationsfrequenz des optischen Anregungssignals moduliert ist und phasenverschoben ist zu dem modulierten optischen Abregungssignal. Somit wirkt das Abregungssignal der Oszillation des akustischen Resonanzelements gerade entgegen. Hierdurch wird die Oszillation bzw. das Nachschwingen des akustischen Resonanzelements gedämpft bzw. gestoppt. Unerwünschtes Nachschwingen des akustischen Resonanzelements, welches insbesondere verursacht wird durch die hohe Resonatorgüte des akustischen Resonanzelements, wird hierdurch deutlich verkürzt, so dass innerhalb kurzer Zeit erneut eine Messung insbesondere mit einer anderen Wellenlänge des optischen Anregungssignals durchgeführt werden kann. Somit ist es möglich, auf einfache und schnelle Weise großen Wellenlängen zu erfassen und hierdurch insbesondere Absorptionsspektren auch bei unbekannten Probenzusammensetzungen in dem Probevolumen zu erfassen.

Vorzugsweise ist die Steuerungseinheit verbunden mit dem Modulationselement der Lichtquelle oder einem zweiten Modulationselement einer zweiten Lichtquelle, wobei mittels des Modulationselements das Abregungssignal moduliert wird als optisches Abregungssignal. Somit können in einer ersten Ausführungsform Anregungssignal und Abregungssignal von derselben Lichtquelle stammen und werden durch dasselbe Modulationselement entsprechend moduliert. Alternativ hierzu ist eine Lichtquelle für das optische Anregungssignal vorgesehen sowie eine Lichtquelle für die Erzeugung des optischen Abregungssignals, wobei das optische Abregungssignal durch ein separates Modulationselement oder dasselbe Modulationselement moduliert werden. Insbesondere weisen das optische Anregungssignal sowie das optische Abregungssignal die gleiche oder eine ähnliche Wellenlänge auf. Hierdurch wird sichergestellt, dass das optische Abregungssignal ebenfalls durch die Probe absorbiert wird und entsprechende Dichteschwankungen erzeugt. Diese Dichteschwankungen sind jedoch aufgrund des Phasenversatzes zwischen der Modulation des optischen Anregungssignals und des optischen Abregungssignals ebenfalls phasenverschoben zu der durch das modulierte optische Anregungssignal erzeugten Dichteschwankung und wirken somit der Oszillation des akustischen Resonanzelements gerade entgegen. Die Oszillation des akustischen Resonanzelements wird somit gedämpft.

Alternativ hierzu ist die Steuerungseinheit mit dem akustischen Resonanzelement verbunden, wobei das Abregungssignal als elektronisches Signal von der Steuerungseinheit auf das akustische Resonanzelement übertragbar ist. Insbesondere weist das akustische Resonanzelement ein Piezoelement auf, welches ebenfalls zur Erfassung der Anregung des akustischen Resonanzelements dient. Der Prozess kann jedoch auch umgekehrt werden, so dass bei Anlegen eines elektronischen Abregungssignals an dieses piezoelektrische Element von dem piezoelektrischen Element eine Schwingung erzeugt wird, die gerade phasenverschoben ist, zu der durch die Dichteschwankungen auf das akustische Resonanzelement übertragene Oszillation. Hierdurch wird ebenfalls eine Dämpfung der Oszillation des akustischen Resonanzelements durch eine kohärente Kontrolle erzeugt.

Weiterhin ist die vorliegende Vorrichtung weitergebildet anhand der Merkmale des vorstehend beschriebenen Verfahrens.

Nachfolgend wird die Erfindung anhand bevorzugter Ausführungsformen unter Bezugnahme auf die beigefügten Figuren näher erläutert.

Die Figuren zeigen:
- Fig. 1: einen schematischen Aufbau zur Durchführung des Verfahrens gemäß der vorliegenden Erfindung,
- Fig. 2: ein schematisches Ablaufdiagramm des Verfahrens gemäß der vorliegenden Erfindung,
- Fig. 3: Details der Anregung des akustischen Resonanzelements im Vergleich mit dem Stand der Technik,
- Fig. 4: eine Vergleichsmessung für unterschiedliche Phasenversatze des Abregungssignals,
- Fig. 5A: unterschiedliche Absorptionsspektren in Abhängigkeit der Scangeschwindigkeit gemäß dem Stand der Technik,
- Fig. 5B: unterschiedliche Absorptionsspektren für unterschiedliche Scangeschwindigkeiten gemäß der vorliegenden Erfindung,
- Fig. 6: einen Vergleich von Spektren ermittelt gemäß dem Verfahren der vorliegenden Erfindung im Vergleich mit dem HITRAN-Standard,
- Fig. 7: einen Vergleich der Genauigkeit des vorliegenden Verfahrens mit einem Verfahren des Standes der Technik für unterschiedliche Scangeschwindigkeiten.

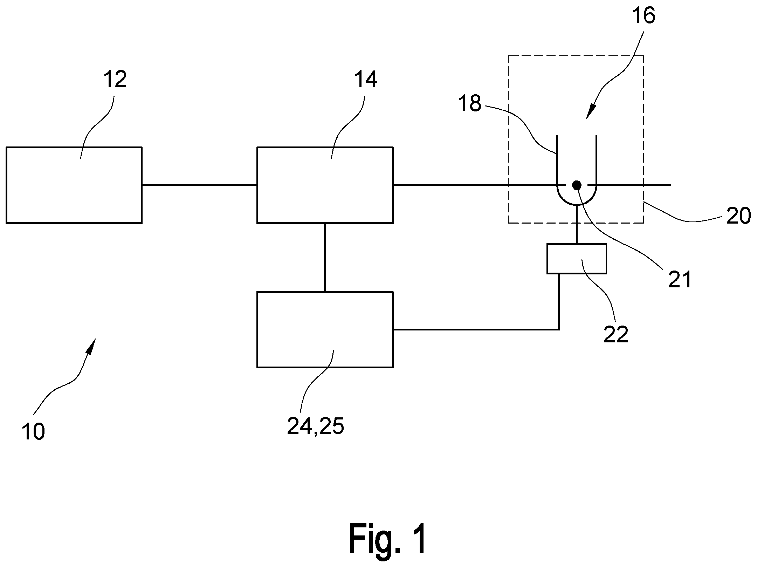

Im Folgenden wird Bezug genommen auf die Figur 1. In der Figur 1 ist eine Vorrichtung 10 zur Detektion eines Absorptionsspektrums gemäß der vorliegenden Erfindung schematisch dargestellt. Die Vorrichtung weist eine Lichtquelle 12 auf, welche insbesondere als durchstimmbare Lichtquelle ausgebildet sein kann. Insbesondere handelt es sich bei der Lichtquelle 12 um einen optisch-parametrischen Oszillator. Insbesondere kann dieser durch einen oder mehrere nachgeschaltete nichtlineare Kristalle im Durchstimmbereich erweitert werden, z.B. durch Frequenzverdopplung oder Differenzfrequenzerzeugung. Alternativ hierzu können mehrere Lichtquellen vorgesehen sein, welche bei unterschiedlichen Wellenlängen Licht erzeugen. Weiterhin weist die Vorrichtung 10 ein Modulationselement 14 auf. Insbesondere ist das Modulationselement als akustisch-optischer Modulator ausgebildet. Alternativ hierzu kann es sich bei der Lichtquelle 12 um eine gepulste Lichtquelle handeln, deren Repetitionsfrequenz/Pulsfrequenz gerade der Modulationsfrequenz entspricht. Mittels des Modulationselements 14 wird das Licht der Lichtquelle 12 moduliert mit einer Modulationsfrequenz. Insbesondere beträgt diese Modulationsfrequenz 12 kHz, ist jedoch frei wählbar. Weiterhin weist die Vorrichtung ein akustisches Resonanzelement 16 auf, welches insbesondere als Stimmgabel 18 ausgebildet ist. Jedoch ist die vorliegende Erfindung nicht auf die Form des akustischen Resonanzelementes als Stimmgabel beschränkt, so das andere akustische Resonanzelemente und insbesondere andere Formen von akustischen Resonanzelementen ebenfalls von der vorliegenden Erfindung umfasst sind. So kann beispielsweise das akustische Resonanzelement auch als elektrisches Resonanzelement ausgebildet sein. Mit dem akustischen Resonanzelement 16 ist ein Piezoelement 22 verbunden, wobei durch die Schwingungen des akustischen Resonanzelements 16 über das Piezoelement 22 ein elektrisches Signal erzeugt wird bei Anregung des akustischen Resonanzelements 16. In der Ausführungsform der Figur 1 ist hierbei das akustische Resonanzelement 16 innerhalb eines Probevolumens 20 angeordnet. Das modulierte optische Anregungssignal wird auf eine Probe 21 in dem Probevolumen 20 gerichtet, wobei durch das modulierte optische Anregungssignal Dichteschwankungen in dem Probevolumen 20 erzeugt werden mit einer Frequenz, die der Modulationsfrequenz, erzeugt durch das Modulationselement 14, entspricht. Das akustische Resonanzelement 16 weist dabei eine Resonanzfrequenz auf, die im Wesentlichen identische ist mit der Modulationsfrequenz des Modulationselements 14. Wird somit das modulierte optische Anregungssignal innerhalb des Probevolumens 20 absorbiert, werden Dichteschwankungen erzeugt, die die Stimmgabel 18 des akustischen Resonanzelements 16 in Schwingung versetzen. Die Schwingung der Stimmgabel 18 wird sodann von dem Piezoelement 22 in ein elektrisches Signal umgewandelt, welches von Detektionseinheit 25 detektiert wird. In der Darstellung der Figur 1 ist dabei die Detektionseinheit und die Steuerungseinheit 24 als integrierte Komponenten dargestellt. Alternativ können diese auch separat ausgebildet sein. Somit kann auf Grundlage der Anregung des akustischen Resonanzelements 16 auf eine Absorption des optischen Anregungssignals bei der Wellenlänge des optischen Anregungssignals geschlossen werden. Aufgrund der Güte des akustischen Resonanzelements 16 schwingt die Stimmgabel 18 lange nach. Zur Dämpfung dieser Schwingung wird somit durch die Steuerungseinheit 24 und das Modulationselement 14 sodann ein Abregungssignal erzeugt. Dieses Abregungssignal kann in einer ersten Ausführungsform als elektrisches Signal auf das Piezoelement 22 übertragen werden. Somit werden durch das Piezoelement 22 Schwingungen auf die Stimmgabel 18 übertragen werden, wobei das Anregungssignal phasenverschoben ist zu der Oszillation der Stimmgabel 18 aufgrund der durch das optische Anregungssignal erzeugte Dichteschwankung. In einer weiteren Ausführungsform ist das Abregungssignal als optisches Abregungssignal ausgebildet, wobei die Steuerungseinheit 24 mit dem Modulationselement 14 verbunden ist und das Licht der Lichtquelle 12 derart durch das Modulationselement 14 moduliert wird, dass in dem Probevolumen 20 Dichteschwankungen erzeugt werden, die der Oszillation der Stimmgabel 18 entgegenwirken und die Oszillation der Stimmgabel dämpfen. Hierzu ist das optische Abregungssignal moduliert mit derselben Modulationsfrequenz wie das modulierte optische Anregungssignal, welche gerade auch der Resonanzfrequenz der Stimmgabel 18 des akustischen Resonanzelements 16 entspricht. Weiterhin weisen das optische Anregungssignal und das optische Abregungssignal eine wesentliche identische Wellenlänge auf, welche sich insbesondere um weniger als 10 cm⁻¹ und bevorzugt weniger als 5 cm⁻¹ unterscheidet. Insbesondere, sofern mehrere Messungen der Absorption hintereinander in dem Probevolumen 20 durchgeführt werden und die Wellenlänge der Lichtquelle 12 kontinuierlich geändert wird, kann aufgrund des zeitlichen Versatzes des optischen Anregungssignals und des optischen Abregungssignals durch die Lichtquelle 12 zum Zeitpunkt des optischen Abregungssignals bereits eine geringfügig andere Wellenlänge erzeugt werden. Hierbei ist lediglich wichtig, dass der Wellenlängenunterschied kleiner oder gleich der Linienbreite des Absorptionsspektrums der Probe ist, also nicht wesentlich größer ist als die Breite der Rotations- und Vibrationsbande der Probe.

In der Ausführung der Figur 1 ist gezeigt, dass durch dieselbe Lichtquelle 12 und dieselbe Modulationseinheit 14 sowohl das optische Anregungssignal als auch das optische Abregungssignal moduliert werden. Hierauf ist die vorliegende Erfindung jedoch nicht beschränkt, so dass das optische Anregungssignal beispielsweise von einer zweiten Lichtquelle erzeugt werden kann und sodann von demselben Modulationselement 14 moduliert werden kann. Alternativ hierzu wird das optische Anregungssignal von derselben Lichtquelle 12 erzeugt, jedoch moduliert von einem zweiten Modulationselement. Alternativ hierzu wird das optische Abregungssignal von einer zweiten Lichtquelle erzeugt und sodann von einem zweiten Modulationselement moduliert und ist somit unabhängig von der Erzeugung des modulierten optischen Anregungssignals.

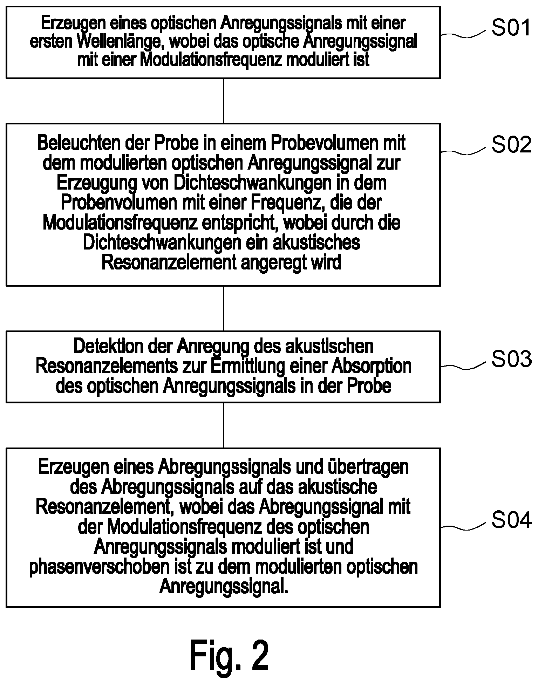

Nachfolgend wird Bezug genommen auf die Figur 2. Figur 2 zeigt ein schematisches Ablaufdiagramm des Detektionsverfahrens. Das Verfahren weist hierbei folgende Schritte auf:
In Schritt S01 wird ein optisches Anregungssignal erzeugt mit einer ersten Wellenlänge, wobei das optische Anregungssignal mit einer Modulationsfrequenz moduliert ist.

In Schritt S02 wird die Probe in einem Probevolumen beleuchtet mit dem modulierten optischen Anregungssignal zur Erzeugung von Dichteschwankungen in dem Probenvolumen mit einer Frequenz, die der Modulationsfrequenz entspricht, wobei durch die Dichteschwankungen ein akustisches Resonanzelement angeregt wird.

In Schritt S03 wird die Anregung des akustischen Resonanzelements detektiert zur Ermittlung einer Absorption des optischen Anregungssignals in der Probe.

In Schritt S04 wird ein Abregungssignal erzeugt und übertragen auf das akustische Resonanzelement, wobei das Abregungssignal mit der Modulationsfrequenz des optischen Anregungssignals moduliert ist und phasenverschoben ist zu dem modulierten optischen Anregungssignal.

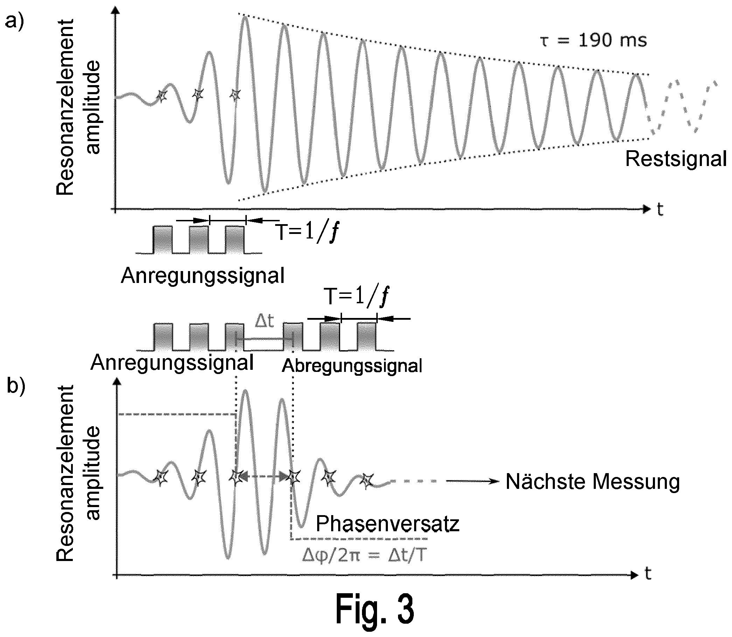

Nachfolgend wird Bezug genommen auf die Figuren 3a) und 3b) der Figur 3. Figur 3a zeigt die Oszillation des akustischen Resonanzelements 16 bei Anregung durch ein moduliertes optisches Anregungssignal. Im Beispiel der Figuren 3a) und 3b) weist das Anregungssignal drei optische Pulse auf. Selbstverständlich kann das Anregungssignal mehr als drei Pulse aufweisen. Insbesondere weist das Anregungssignal eine Frequenz von 12 kHz auf. Hierbei weist beispielsweise ein Anregungssignal von der Länge 8 ms etwa 96 optische Pulse auf, welche eine entsprechend modulierte Dichteschwankung in dem Probevolumen 20 erzeugen, die zu der in den Figuren 3a) und 3b) gezeigte Anregung des akustischen Resonanzelements 16 führen. In der Darstellung der Figuren 3a) und 3b) ist hierbei das Anregungssignal durch Rechteckimpulse dargestellt. Alternativ kann auch ein sinusförmiges Anregungssignal oder gar ein dreieckförmiges oder sägezahnförmiges Anregungssignal verwendet werden.

Figur 3a) zeigt den Stand der Technik, wobei nach der Anregung des akustischen Resonanzelements 16 ein Nachschwingen der Stimmgabel 18 auftritt, wobei die Halbwertszeit dieses Nachschwingens abhängt von der Resonatorgüte Q des akustischen Resonanzelements 16. Insbesondere kann die Halbwertszeit des Nachschwingens mehr als 200 ms betragen.

Figur 3b) zeigt die vorliegende Erfindung, wobei nach dem Anregungssignal in einem Abstand von Δ*t* von dem Anregungssignal ein Abregungssignal erzeugt wird und auf das akustische Resonanzelement 16 übertragen wird. Hierdurch wird im Sinne einer kohärenten Kontrolle die Oszillation des akustischen Resonanzelements 16 gedämpft. Insbesondere beträgt der zeitliche Abstand Δ*t = T*/2 mit T als Periodendauer des modulierten optischen Anregungssignals bzw. des Abregungssignals. Nach der Anregung durch das optische Anregungssignal, zwischen dem Anregungssignal und dem Abregungssignal oder mit Anlegen des Abregungssignals kann eine Messung der Anregung des akustischen Resonanzelements 16 erfolgen und hierbei auf die Absorption bei der Wellenlänge des optischen Anregungssignals geschlossen werden. Wie aus der Figur 3b) ersichtlich, ist bereits nach kurzer Zeit durch Anlegen des Abregungssignals die Oszillation des akustischen Resonanzelements 16 gedämpft, so dass erneut eine Messung erfolgen kann, insbesondere bei einer weiteren Wellenlänge. Die Erfassung eines vollständigen Absorptionsspektrums über einen weiten Wellenlängenbereich ist somit in deutlich kürzerer Zeit möglich.

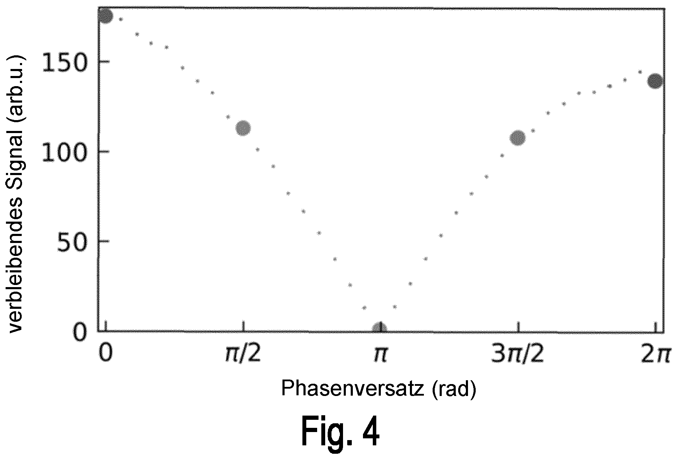

Im Folgenden wird Bezug genommen auf die Figur 4. Hierbei ist der Phasenversatz des Abregungssignals abgetragen gegenüber dem verbleibenden Signal der Anregung des akustischen Resonanzelements 16 gemessen jeweils nach 10 ms. Wie ersichtlich, ist bei keinen Phasenversatz zwischen dem optischen Anregungssignal und einem Abregungssignal nach 10 ms ein deutliches verbleibendes Restsignal sichtbar, welches durch das Nachschwingen des akustischen Resonanzelements 16 verursacht wird. Wird sodann der Phasenversatz erhöht, reduziert sich die verbleibende Schwingung des akustischen Resonanzelements 16 und insbesondere bei einem Phasenversatz von π ist bereits nach 10 ms die gesamte Oszillation des akustischen Resonanzelements 16 gedämpft. Wird der Phasenversatz weiter erhöht, ist die Dämpfung nicht mehr vollständig. Dies ist periodisch, so dass bei n · *π*, mit n als einer ungeraden Ganzzahl, jeweils eine vollständige Dämpfung der Oszillation des akustischen Resonanzelements 16 bereits nach 10 ms erreicht werden kann.

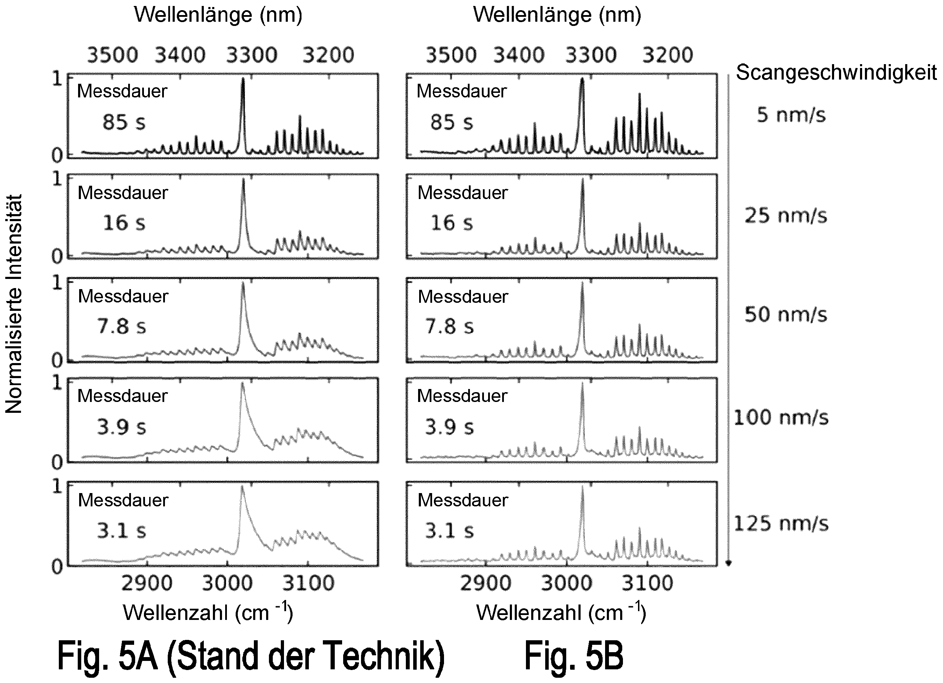

Im Folgenden wird Bezug genommen auf die Figuren 5A und 5A. Figur 5A zeigt hierbei den Stand der Technik im Vergleich zu den Ergebnissen gezeigt in der Figur 5B gemäß der vorliegenden Erfindung. Die Figuren 5A und 5B zeigen Absorptionsspektren, welche bei unterschiedlichen Scangeschwindigkeiten aufgenommen werden. Figur 5A bestätigt hierbei die Erkenntnisse von Christensen et al., wobei mit steigender Scangeschwindigkeit aufgrund des Nachschwingens des akustischen Resonanzelements 16 eine Verfälschung der erfassten Absorptionsspektren bzw. ein "Ausschmieren" erfolgt. Hingegen ist in der Figur 5B ersichtlich, dass das erfasste Absorptionsspektrum unabhängig oder zumindest nahezu unabhängig ist von der Scangeschwindigkeit und insbesondere auch bei sehr großen Scangeschwindigkeiten von 125 nm/s keine sichtbaren Veränderungen auftreten. Somit ist insbesondere ein vollständiges Absorptionsspektrum im Bereich von 3.000 nm bis 3.700 nm innerhalb von 3.1 s möglich.

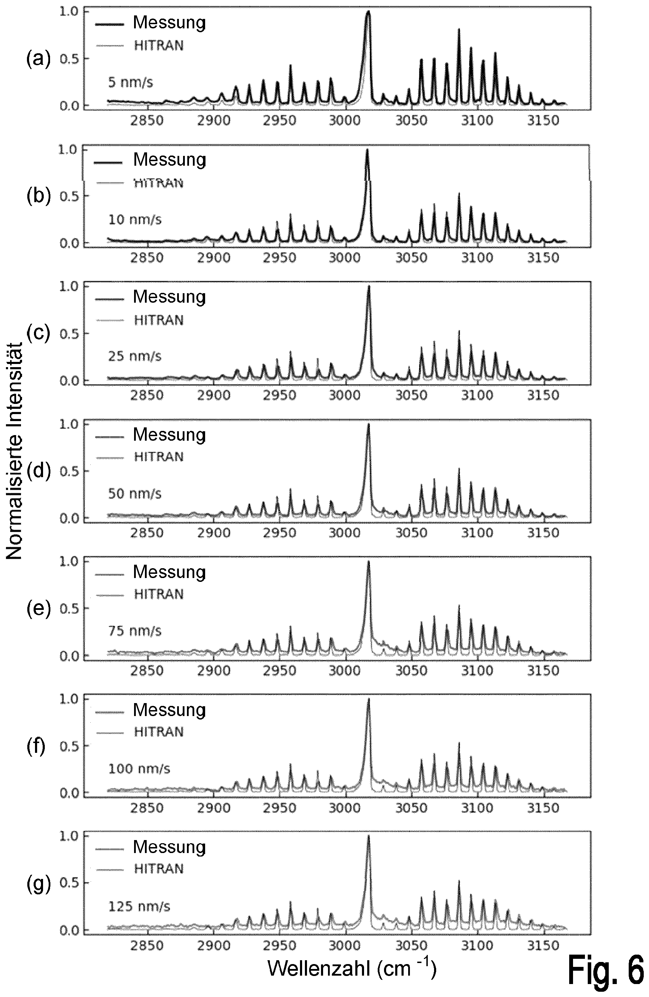

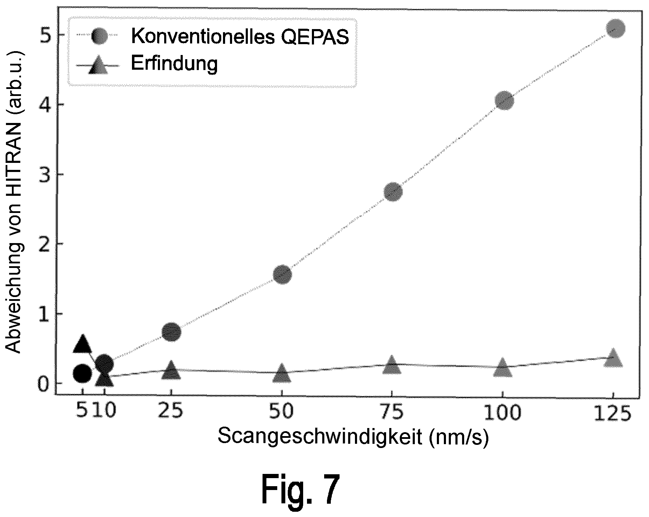

Im Folgenden wird Bezug genommen auf die Figur 6, welche Absorptionsspektren für unterschiedliche Scangeschwindigkeiten zeigen im Vergleich mit den HITRAN-Daten. Wie ersichtlich, ergeben sich kaum bzw. nur geringe Abweichungen zu den HITRAN-Daten unabhängig von der gewählten Scangeschwindigkeit. Dies ist auch in der Figur 7 gezeigt, wo die Abweichung von HITRAN für unterschiedliche Scangeschwindigkeiten für ein konventionelles QEPAS sowie ein QEPAS mit kohärenter Kontrolle gemäß der vorliegenden Erfindung gegeneinander abgetragen sind. Während die Abweichung von HITRAN für ein QEPAS mit kohärenter Kontrolle gemäß der vorliegenden Erfindung im Wesentlichen konstant bleibt und unabhängig ist von der Scangeschwindigkeit, steigt die Abweichung bei konventionellem QEPAS mit der Scangeschwindigkeit an.

Somit wird durch die vorliegende Erfindung ein Verfahren sowie eine Vorrichtung geschaffen, mit der einerseits akustische Resonanzelemente mit einer hohen Güte verwendet werden können, zur hochempfindlichen Detektion von Molekülen und Materialien in gasförmigen, flüssigen und Festkörperproben. Gleichzeitig ist es möglich, durch die kohärente Kontrolle, welche bereitgestellt wird durch das phasenverschoben Abregungssignal, große Wellenlängenbereiche innerhalb kurzer Zeit zu erfassen und hierdurch ein gesamtes Absorptionsspektrum insbesondere auch von unbekannten Molekülen oder Materialien einer Probe zu erfassen und schnelle Konzentrationsänderungen des vorliegenden Gases bestimmen zu können.

## Patentansprüche

1. Detektionsverfahren zur Absorptionsdetektion in einer Probe in einem Probevolumen mit den Schritten:
Erzeugen eines optischen Anregungssignals mit einer ersten Wellenlänge, wobei das optische Anregungssignal mit einer Modulationsfrequenz moduliert ist,
Beleuchten der Probe in einem Probevolumen mit dem modulierten optischen Anregungssignal zur Erzeugung von Dichteschwankungen in dem Probenvolumen mit einer Frequenz, die der Modulationsfrequenz entspricht, wobei durch die Dichteschwankungen ein akustisches Resonanzelement angeregt wird,
Detektion der Anregung des akustischen Resonanzelements zur Ermittlung einer Absorption des optischen Anregungssignals in der Probe, und
Erzeugen eines Abregungssignals und Übertragen des Abregungssignals auf das akustische Resonanzelement, wobei das Abregungssignal mit der Modulationsfrequenz des optischen Anregungssignals moduliert ist und phasenverschoben ist zu dem modulierten optischen Anregungssignal.

2. Detektionsverfahren nach Anspruch 1, wobei die Modulationsfrequenz des optischen Anregungssignals einer Resonanzfrequenz oder einem Oberton des akustischen Resonanzelements entspricht.

3. Detektionsverfahren nach Anspruch 1 oder 2, wobei die Schritte des Verfahrens wiederholt werden bei einer zweiten Wellenlänge und insbesondere über einen Wellenlängenbereich, wobei insbesondere die Wellenlänge kontinuierlich oder schrittweise verändert wird.

4. Detektionsverfahren nach einem der Ansprüche 1 bis 3, wobei die Wellenlänge des optischen Anregungssignals geändert wird mit mehr als 50 cm⁻¹s⁻¹ und bevorzugt mehr als 100 cm⁻¹s⁻¹.

5. Detektionsverfahren nach einem der Ansprüche 1 bis 4, wobei das Abregungssignal um 180° phasenverschoben ist oder *n ·* 180°, mit *n* als einer ungeraden Ganzzahl.

6. Detektionsverfahren nach einem der Ansprüche 1 bis 5, wobei die Phase des Abregungssignal kontinuierlich verändert wird bis zu einem Phasenversatz von 180° bzw. *n ·* 180°, mit *n* als einer ungeraden Ganzzahl.

7. Detektionsverfahren nach einem der Ansprüche 1 bis 6, wobei zwischen einem Ende des Anregungssignal und einem Anfang des Abregungssignal einen zeitlichen Abstand von Δ*t* = *n*/2 · *T* aufweist mit *n* als einer ungeraden Ganzzahl und *T* der Periodendauer der Modulation des optischen Anregungssignals.

8. Detektionsverfahren nach einem der Ansprüche 1 bis 7, wobei das modulierte optische Anregungssignal eine Sequenz aus optischen Pulsen umfasst.

9. Detektionsverfahren nach einem der Ansprüche 1 bis 8, wobei das akustische Resonanzelement eine Quarzgabel ist mit einem Piezoelement, wobei durch das Piezoelement die Anregung des akustischen Resonanzelements detektiert wird.

10. Detektionsverfahren nach Anspruch 9, wobei das Abregungssignal als elektrisches Signal erzeugt wird, welches mittels dem Piezoelement auf die Quarzgabel übertragen wird.

11. Detektionsverfahren nach einem der Ansprüche 1 bis 8, wobei das Abregungssignal als optisches Signal erzeigt wird.

12. Detektionsverfahren nach einem der Ansprüche 1 bis 11, wobei das Probevolumen ein Gas, ein Festkörper oder eine Flüssigkeit umfasst.

13. Vorrichtung zur Absorptionsdetektion in einer Probe mit
einer Lichtquelle zur Erzeugung eines optischen Anregungssignals,
einem Modulationselement zur Modulation des optischen Anregungssignals mit einer Modulationsfrequenz, wobei durch das modulierte optische Anregungssignal in der Probe in einem Probevolumen eine Dichteschwankung erzeugt wird,
einem akustischen Resonanzelement, wobei das akustische Resonanzelement resonant ist zu der Modulationsfrequenz,
einer Detektionseinheit, wobei die Detektionseinheit mit dem akustischen Resonanzelement verbunden ist zur Detektion einer Anregung des akustischen Resonanzelements, und
einer Steuerungseinheit, wobei die Steuerungseinheit ausgebildete ist ein Abregungssignal zu erzeugen und auf das akustische Resonanzelement zu übertragen, wobei das Abregungssignal mit der Modulationsfrequenz des optischen Anregungssignals moduliert ist und phasenverschoben ist zu dem optischen Anregungssignal.

14. Vorrichtung nach Anspruch 13, **dadurch gekennzeichnet, dass** die Steuerungseinheit verbunden ist mit dem Modulationselement der Lichtquelle oder einem zweiten Modulationselement einer zweiten Lichtquelle, wobei mittels dem Modulationselement das Abregungssignal erzeugt wird als optisches Abregungssignal.

15. Vorrichtung nach Anspruch 13, **dadurch gekennzeichnet, dass** die Steuerungseinheit mit dem akustischen Resonanzelement verbunden ist, wobei das Abregungssignal als elektronisches Signal von der Steuerungseinheit auf das akustische Resonanzelement übertragbar ist.
